# EUROPEAN PATENT APPLICATION

(11) **EP 1 826 529 A1**
(43) Date of publication of application: **29.08.2007**
(21) Application number: 05809507.6
(22) Date of filing: 22.11.2005
(51) Int. Cl.: G01B 11/24, G01N 21/88

(54) **EXTERNAL-APPEARANCE INSPECTION APPARATUS**

(30) Priority: 22.11.2004 JP 2004337566
(71) Applicant: Bridgestone Corporation, Tokyo 104-8340 (JP)
(72) Inventor: KANEKO, Tomoyuki c/o Bridgestone Corporation, Kodaira-shi Tokyo 187-8531 (JP); MIZUTANI, Akinobu c/o Bridgestone Corporation, Kodaira-shi Tokyo 187-8531 (JP)
(74) Representative: Whalley, Kevin
(86) International application number: PCT/JP2005/021475
(87) International publication number: WO 2006/054775

(57) **Abstract**

The present invention relates to an external-appearance apparatus that inspects an external appearance of a photographing object to combine a two-dimensional image and a three-dimensional image to improve inspection accuracy. The external-appearance inspection apparatus 10 includes a 3D camera 30 that acquires a three-dimensional image of an object, a 2D camera 20 that acquires a two-dimensional image of the object, and a second converter 16 that assigns pixel values of the two-dimensional image corresponding to the physical coordinates of pixels of the three-dimensional image to the physical coordinates corresponding to pixels of the three-dimensional image.

## Description

### Technical Field

The present invention relates to an external-appearance inspection apparatus that inspects an external-appearance of a photographing object based on a shape image and a color image of the photographing object such as a tire, tire components or the like.

### Background Art

Conventionally, the image of an object is photographed using a camera (for example, a 3D camera) that photographs a shape image (three-dimensional image) and a camera (for example, a 2D camera) that photographs a color image (two-dimensional image).

Moreover, the shape image and the color image of a single object are photographed and information of the images is processed to thereby evaluate the object. For example, as one product inspection, there is proposed an apparatus that photographs a product using a line camera that acquires a color image of the product and an area camera that acquires a shape image (for example, see Japanese Patent Application Laid-open Publication No. 2001-249012).

The apparatus described in Japanese Patent Application Laid-open Publication No. 2001-249012 compares the color image acquired by the line camera and the shape image acquired by the area camera with the prestored color and shape images of the product, respectively, to thereby determine whether the external-appearance and the shape of the product are good or not.

As mentioned above, the color image and the shape image were used to determine the external-appearance and the shape, respectively. The color image and the shape image, however, were pixel information, and the 3D camera and the 2D camera differ in adjusted values such as the setting condition, the distance, the aperture of lens, and the focus, resulting in difficulty in combing the images.

Accordingly, in view of the aforementioned problem, an object of the present invention is to provide an external-appearance inspection apparatus that combines a two-dimensional image and a three-dimensional image to improve inspection accuracy.

### Disclosure of Invention

In order to attain the aforementioned object, a feature of the present invention is an external-appearance inspection apparatus that inspects an appearance of an object, including a first image acquiring unit configured to acquire a three-dimensional image of the object; a second image acquiring unit configured to acquire a two-dimensional image of the object; and a converter configured to assign pixel values of the two-dimensional image corresponding to physical coordinates of pixels of the three-dimensional image to physical coordinates corresponding to the pixels of the three-dimensional image.

The external-appearance inspection apparatus according to the feature of the present invention further includes a first basic data acquiring unit configured to acquire in advance a look up table for a three-dimensional image to convert digitalized data of luminance gradation to arbitrary physical coordinates; and a second basic data acquiring unit configured to acquire in advance a look up table for a two-dimensional image to correct digitalized data of luminance gradation to an arbitrary gradation. In the external-appearance inspection apparatus, the converter may convert the three-dimensional image of the object to predetermined physical coordinates for each pixel with reference to the look up table for the three-dimensional image, and assign pixel values of the two-dimensional image corresponding to the predetermined physical coordinates of pixels of the three-dimensional image to the predetermined physical coordinates with reference to the look up table for the two-dimensional image.

Moreover, in the external-appearance inspection apparatus according to the feature of the present invention, the look up table for the two-dimensional image may store the physical coordinates of the pixels of the three-dimensional image and the pixel values of the two-dimensional image to be associated with each other.

Furthermore, in the external-appearance inspection apparatus according to the feature of the present invention, the look up table for the two-dimensional image may be acquired to be associated with the physical coordinates of the look up table for the three-dimensional image.

Moreover, in the external-appearance inspection apparatus according to the feature of the present invention, the look up table for the two-dimensional image may be acquired by photographing a line image multiple times at a fixed interval every time a distance from a camera is changed.

### Brief Description of Drawings

[Fig. 1]

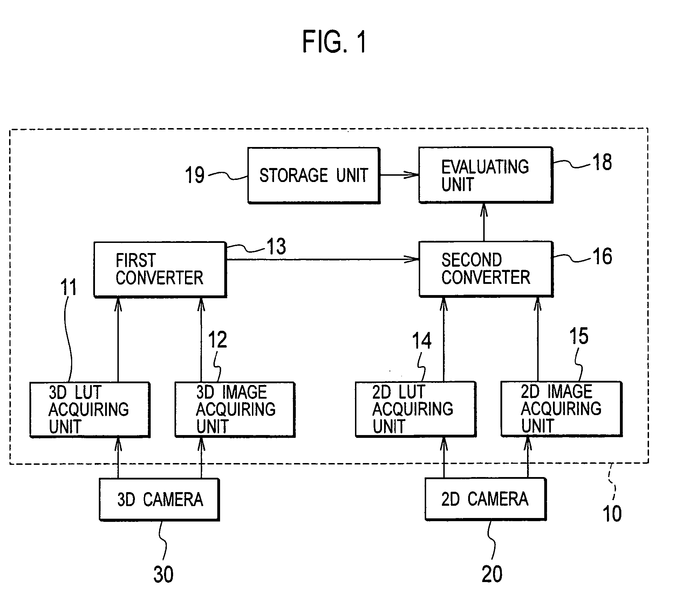

   Fig. 1 is a structural block diagram of an external-appearance inspection apparatus 10 according to this embodiment.
[Fig. 2]

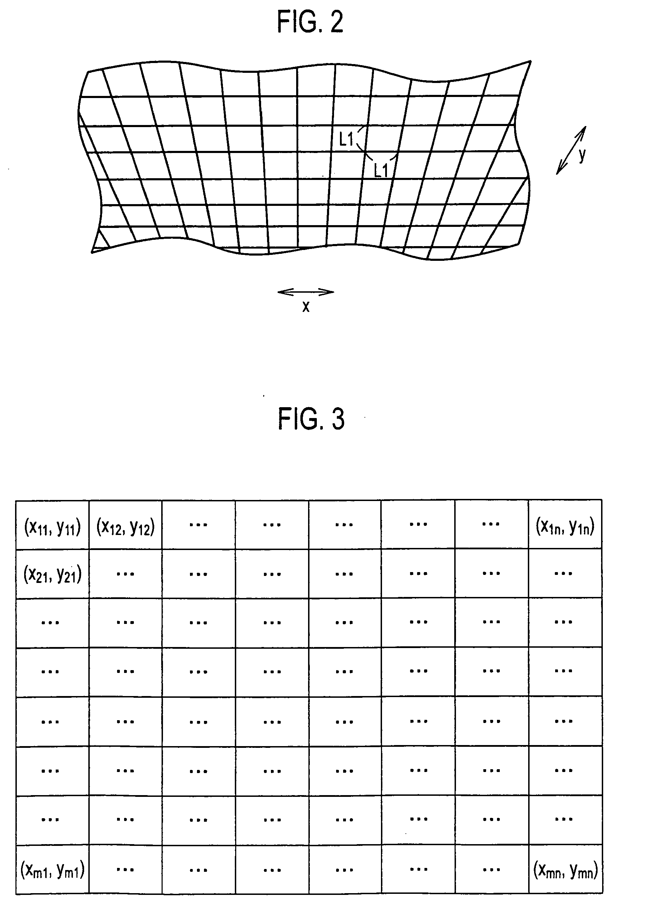

   Fig. 2 shows a photographing object for use in creating an LUT of a three-dimensional image according to this embodiment.
[Fig. 3]
   Fig. 3 shows one example of an LUT of a three-dimensional image according to this embodiment.
[Fig. 4]

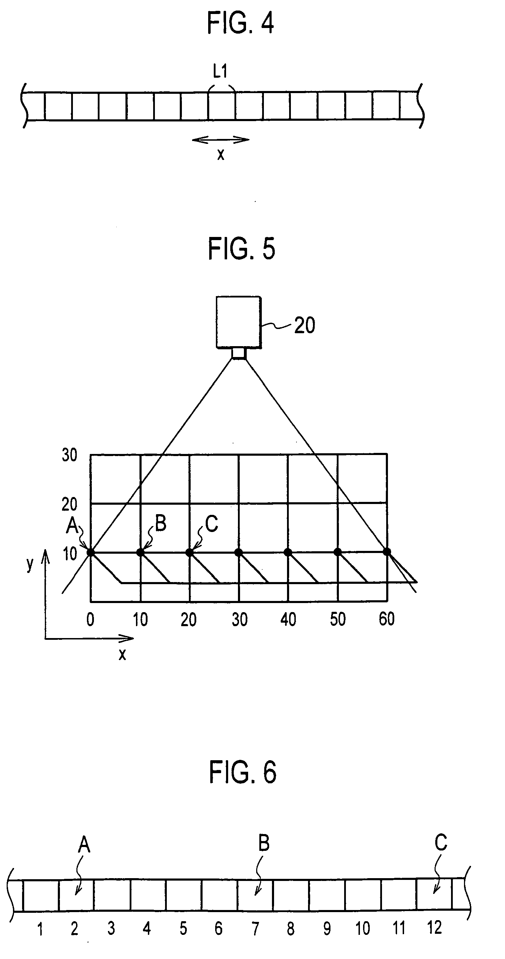

   Fig. 4 shows a photographing object for use in creating an LUT of a two-dimensional image according to this embodiment.
[Fig. 5]
   Fig. 5 is a schematic view illustrating a process in creating an LUT of a two-dimensional image according to this embodiment.
[Fig. 6]
   Fig. 6 is a view explaining pixel values of a two-dimensional image according to this embodiment.
[Fig. 7]

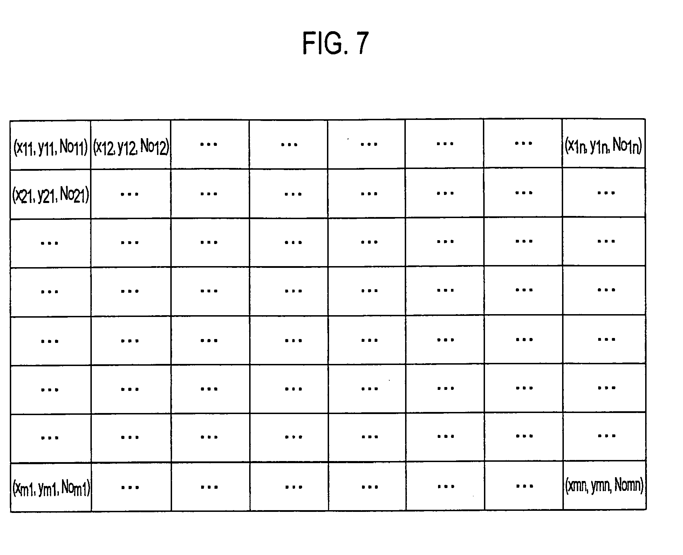

   Fig. 7 shows one example of an LUT of a two-dimensional image according to this embodiment.
[Fig. 8]

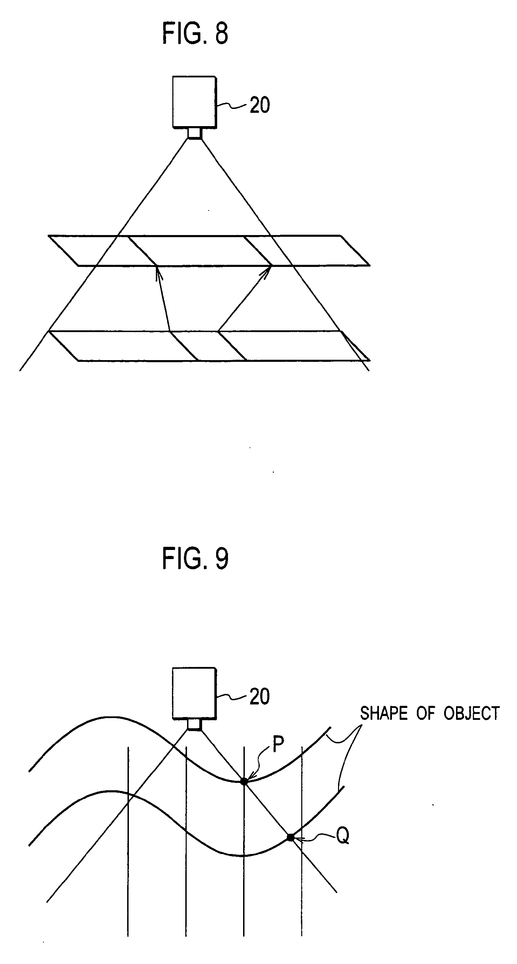

   Fig. 8 is a schematic view illustrating a process in creating an LUT of a two-dimensional image according to this embodiment.
[Fig. 9]
   Fig. 9 is a schematic view illustrating a process in creating an LUT of a two-dimensional image according to this embodiment.
[Fig. 10]

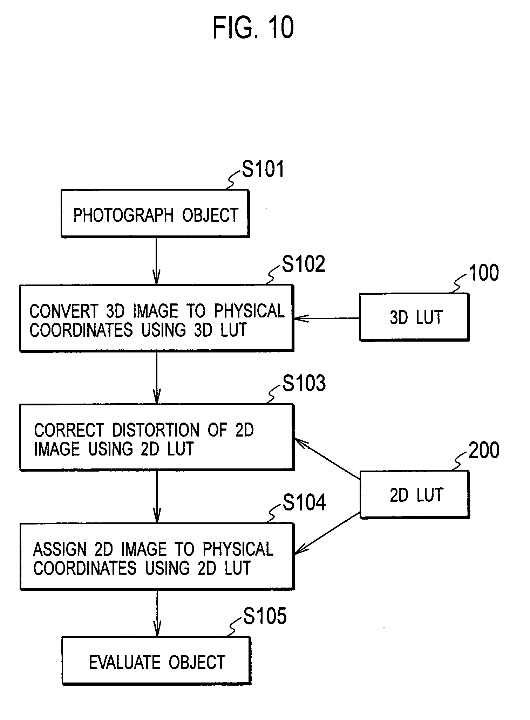

   Fig. 10 is a flowchart illustrating an external-appearance inspection method according to this embodiment.

### Best Mode for Carrying Out the Invention

An embodiment of the present invention will be explained next with reference to the drawings. In the description of the drawings set forth below, the same or similar reference numerals are added to the same or similar parts. However, it should be noted that the drawings are schematically shown.

### (External-appearance inspection apparatus)

An external-appearance inspection apparatus 10 of an embodiment of the present invention will be explained using Fig. 1. The external-appearance inspection apparatus 10 acquires a three-dimensional image (shape image), which represents roughness of a surface of a photographing object, from a 3D camera 30 and acquires a two-dimensional image (color image), which represents color (luminance) of the photographing object, from a 2D camera 20. The photographing object includes, for example, products such as a tire, tire components or the like.

The external-appearance inspection apparatus 10 includes a 3DLUT acquiring unit 11, a 3D image acquiring unit 12, a first converter 13, a 2DLUT acquiring unit 14, a 2D image acquiring unit 15, a second converter 16, an evaluating unit 18, and a storage unit 19.

The 3DLUT acquiring unit 11 (a first basic data acquiring unit) acquires a Look Up Table (hereinafter referred to as "3DLUT") for a three-dimensional image from the 3D camera 30. 3DLUT is basic data to be used to convert digitalized data of luminance gradation to arbitrary physical coordinates and is provided for each camera. In processing an image of an object, acquired digital data is corrected to be output using the 3DLUT.

As illustrated in Fig. 2, a lattice having a fixed interval L1 × L1 (for example, 5 × 5 mm) is photographed and the 3DLUT is created based on this image. When the lattice is photographed by the 3D camera 30, the lattice is photographed in a distorted form as shown in Fig. 2. Fig. 3 shows an example of the 3DLUT. In Fig. 3, the number of pixels of the 3D camera is described as m × n and each cell in the figure corresponds to the pixel of the 3D camera. The 3DLUT stores physical coordinates (Xᵢⱼ, Yᵢⱼ) corresponding to each pixel (herein, 1≤i≤m, 1≤j≤m).

The 3D image acquiring unit 12 (first image acquiring unit) acquires a three-dimensional image of the photographing object from the 3D camera 30.

The first converter 13 corrects distortion of the three-dimensional image acquired by the 3D image acquiring unit 12 with reference to the LUT acquired by the 3DLUT acquiring unit 11. In other words, the first converter 13 converts the three-dimensional image of the photographing object to physical coordinates for each pixel with reference to the 3DLUT. More specifically, this shape data is stored as (Xᵢⱼ, Yᵢⱼ) on a memory of the apparatus (for example, storage unit 19) in a floating point format together with x and y.

The 2DLUT acquiring unit 14 (second basic data acquiring unit) acquires an LUT (hereinafter referred to as "2DLUT") for a two-dimensional image from the 2D camera 20. 2DLUT is basic data to be used to convert digitalized data of luminance gradation to arbitrary gradation and is provided for each camera. In processing an image, acquired digital data is corrected to be output using 2DLUT.

As illustrated in Fig. 4, a line is photographed at a fixed interval L1 (for example, 5 mm) and the 2DLUT is created based on this image. More specifically, as illustrated in Fig. 5, a line placed at a specific distance from the 2D camera 20 is photographed and the line position and a pixel value of the 2D camera corresponding to the relevant position are made to correspond to each other so as to create an LUT for a two-dimensional image.

The 2D camera 20 photographs such the line image multiple times at a fixed interval. For example, as illustrated in Fig. 5, a position of 0, a position of 10, a position of 20, and a position of 30 in a y direction are photographed while the distance from the 2D camera 20 is changed, whereby a 2DLUT shown in Fig. 7 can be created. It is necessary that the changing distance from the 2D camera be associated with the lattice size photographed by the 3D camera 30.

Fig. 7 shows an example of the 2DLUT. In Fig. 7, the number of pixels of the 3D camera is described as m x n and each cell in the figure corresponds to the pixel of the 3D camera. The 2DLUT stores physical coordinates corresponding to each pixel of the 3D camera and pixel values of (Xᵢⱼ, yᵢⱼ, Noᵢⱼ) of the 2D camera corresponding to the physical coordinates (herein, 1≤i≤m, 1≤j≤m) "No" herein indicates a number that is allocated for each image data acquired by the 2D camera 20. For instance, when physical coordinates of point A are 0 in an x direction and 10 in a y direction as illustrated in Fig. 5 and a position corresponding to the pixel of the 2D camera 20 that photographed the point A is 2 as illustrated in Fig. 6, values of (0, 10, 2) are stored in the 2DLUT. Similarly, when a position corresponding to the pixel of the 2D camera 20 that photographed a point B is 7 and a position corresponding to the pixel of the 2D camera 20 that photographed a point C is 12, values of (10, 10, 7) and (20, 10, 12) are stored in the 2DLUT.

Moreover, in the case where the line image is photographed by the 2D camera 20, the smaller the distance between the line and the 2D camera, the larger the interval between the photographed image lines as illustrated in Fig. 8. Thus, in the 2D camera 20, an image to be acquired differs depending on the distance from the relevant object even if the object is the same.

For this reason, when photographing the photographing object, the 2D camera 20 can acquire the same No (the position corresponding to the pixel is the same) even in the case of different points (herein, point P and point Q) existing on an extension line of a viewpoint as illustrated in Fig. 9, but an image to be acquired differs depending on the distance between the relevant object and the camera, and therefore, a color image to be acquired differs.

The 2D image acquiring unit 15 (second image acquiring unit) acquires a two-dimensional image of the photographing object from the 2D camera 20.

The second converter 16 corrects distortion of the two-dimensional image acquired by the 2D image acquiring unit 15 with reference to the LUT acquired by the 2DLUT acquiring unit 14. Furthermore, the second converter 16 assigns pixel values of the two-dimensional image corresponding to predetermined physical coordinates of the pixels of the three-dimensional image to predetermined physical coordinates in order to make the acquired two-dimensional image correspond to the physical coordinates of the 3DLUT.

The evaluating unit 18 evaluates an external-appearance of the object using the physical coordinates acquired by the second converter 16 and the color. For example, in the case where the external-appearance inspection apparatus 10 of this embodiment is used to inspect the external-appearance of a tire, physical coordinate data acquired by the second converter 16 is compared with physical coordinate data of the tire stored in the storage unit 19 to thereby determine whether the color and the shape of the tire are good or not.

The storage unit 19 stores physical coordinate data of the object. For example, the storage unit 19 prestores reference determination data for each kind of tire. Moreover, the storage unit 19 stores the 3DLUT acquired from the 3D camera 30 and the 2DLUT acquired from the 2D camera 20. The storage unit 19 may be an internal storage such as a RAM or the like, , and may be an external storage such as a hard disk, a flexible disk or the like.

### (External-appearance inspection method)

An external-appearance inspection method according to this embodiment will be explained using Fig. 10. In the external-appearance inspection method according to this embodiment, a tire is used as a photographing object.

First, the external-appearance inspection apparatus 10 acquires the aforementioned 3DLUT and 2DLUT before photographing a target image.

In step S101, the 3D camera 30 and the 2D camera 20 continuously photograph the side surface of the tire that rotates in a circumferential direction.

Next, in step S102, the first converter 13 converts a three-dimensional image acquired by the 3D image acquiring unit 12 to predetermined physical coordinates for each pixel with reference to a 3DLUT 100 acquired by the 3DLUT acquiring unit 11. At this time, the external-appearance inspection apparatus 10 has pixel values (shape data) of the three-dimensional image for each physical coordinates.

Next, in step S103, the second converter 16 corrects distortion of the two-dimensional image with reference to a 2DLUT 200 acquired by the 2DLUT acquiring unit 14.

Sequentially, in step S104, the second converter 16 assigns pixel values of the two-dimensional image corresponding to predetermined physical coordinates of the pixels of the three-dimensional image to predetermined physical coordinates with reference to the 2DLUT 200 acquired by the 2DLUT acquiring unit 14. In other words, in the two-dimensional image, the corresponding pixel value is assigned to a position xᵢ when height is yᵢⱼ. At this time, the external-appearance inspection apparatus 10 has pixel values (shape data) of the three-dimensional image and pixel values (color data) of the two-dimensional image for each physical coordinates.

The color data is the primary colors (R, G, B) of light, and, for example, each is stored by a value of eight bits. Additionally, the data storage form for each physical coordinates may be represented by a three-dimensional parameter such as (Xᵢⱼ, yᵢⱼ, Noᵢⱼ) or may be represented by a five-dimensional parameter such as (Xᵢⱼ, Yᵢⱼ, R, G, B) . In other words, the shape data and the color data may be related to each other by some parameter regardless of storage form thereof.

Next, in step S105, the evaluating unit 18 evaluates the external-appearance of the tire using the physical coordinates (Xᵢⱼ, Yᵢⱼ) acquired by the second converter 16 and the color (R, G, B). More specifically, physical coordinate data of the tire acquired by the second converter 16 is compared with physical coordinate data of the tire stored in the storage unit 19 to thereby determine whether the color and the shape of the tire are good or not.

Additionally, in step S101, there is a case in which the 2D camera 20 and the 3D camera 30 are arranged at different phase positions in a circumferential direction of the tire side surface in consideration of light reflection due to a photographing method at the time of photographing the tire. In this case, in step S104, the second converter 16 assigns pixel values of the two-dimensional image to predetermined physical coordinates of the three-dimensional image photographed at the same phase position.

When the 3D camera 30 and the 2D camera photograph different positions of the object, in step S104, the second converter 16 corrects the positions and assigns pixel values to appropriate coordinates when assigning pixel values of the two-dimensional image to the physical coordinates of the three-dimensional image.

Moreover, when the size of the object to be photographed exceeds the physical coordinates stored in the 2DLUT and 3DLUT, acquiring new 2DLUT and 3DLUT is necessary.

### (Function and effect)

Conventionally, it was difficult to combine the two-dimensional image and the three-dimensional image since there was a difference therebetween in adjusted values of such as the angle of camera, the distance, the aperture of lens and the focus.

According to the external-appearance inspection apparatus 10 and the external-appearance inspection method of this embodiment of the present invention, pixel values of the two-dimensional image corresponding to the physical coordinates of pixels of the relevant three-dimensional image are assigned to the physical coordinates corresponding to pixels of the three-dimensional image, thereby making it possible to combine the shape data and the color data and improve inspection accuracy.

Moreover, in this embodiment, the external-appearance inspection apparatus 10 includes the 3DLUT acquiring unit 11, the 2DLUT acquiring unit 14, the first converter 13, which converts the three-dimensional image to the predetermined physical coordinates with reference to the 3DLUT, and a second converter 16 which assigns the pixel values of the two-dimensional image corresponding to the predetermined physical coordinates of the pixels of the three-dimensional image to the predetermined physical coordinates with referenced to the 2DLUT. Thus, it is possible to combine the shape data and the color data using the physical coordinates of the three-dimensional image.

Furthermore, in this embodiment, the 2DLUT stores the physical coordinates of the pixels of the three-dimensional image and the pixel values of the two-dimensional image to be associated with each other. Accordingly, by referring to only the 2DLUT, it is possible to correct distortion of the 2D image and combine the color data with the three-dimensional image.

Moreover, in this embodiment, the 2DLUT can be acquired by photographing the line image multiple times at the fixed interval every time the distance from the camera is changed. As mentioned above, by using the 2DLUT based on the line image acquired when the distance from the camera is changed, it is possible to combine the shape data and the color data with higher accuracy.

### (Other embodiments)

Although the present invention has been described according to the aforementioned embodiment, the description and the drawings constituting part of the disclosure should not be understood to limit the present invention. Various alternative embodiments, examples and operational techniques will become apparent to those skilled in the art from the disclosure.

For example, in the external-appearance inspection apparatus 10 and the external-appearance inspection method according to the embodiment of the present invention, although the explanation has been made on the assumption that one color image is used as the two-dimensional image, a plurality of color images may be used. For instance, when photographing is performed using red illumination, blue illumination or the like, combination can be achieved by referring to the shape image.

As described above, it goes without saying that the present invention includes various embodiments which are not described herein. Accordingly, the technical scope of the present invention should be defined only by the claims which are reasonable from the above description.

### Industrial Applicability

As mentioned above, the external-appearance inspection apparatus according to the present invention can combine a two-dimensional image and a three-dimensional image to make it possible to improve inspection accuracy, and therefore can be appropriately used as an apparatus that inspects the external-appearance of, for example, a tire and tire components.

## Claims

1. An external-appearance inspection apparatus (10) that inspects an appearance of an object, comprising:
a first image acquiring unit (12) configured to acquire a three-dimensional image of the object;
a second image acquiring unit (15) configured to acquire a two-dimensional image of the object; and
a converter (13, 16) configured to assign pixel values of the two-dimensional image corresponding to physical coordinates of pixels of the three-dimensional image to physical coordinates corresponding to the pixels of the three-dimensional image.

2. The external-appearance inspection apparatus according to claim 1, further comprising:
a first basic data acquiring unit (11) configured to acquire in advance a look up table for a three-dimensional image to convert digitalized data of luminance gradation to arbitrary physical coordinates;
a second basic data acquiring unit (14) configured to acquire in advance a look up table for a two-dimensional image to correct digitalized data of luminance gradation to an arbitrary gradation; and wherein
the converter converts the three-dimensional image of the object to predetermined physical coordinates for each pixel with reference to the look up table for the three-dimensional image, and assigns pixel values of the two-dimensional image corresponding to the predetermined physical coordinates of pixels of the three-dimensional image to the predetermined physical coordinates with reference to the look up table for the two-dimensional image.

3. The external-appearance inspection apparatus according to claim 2, wherein the look up table for the two-dimensional image stores the physical coordinates of the pixels of the three-dimensional image and the pixel values of the two-dimensional image to be associated with each other.

4. The external-appearance inspection apparatus according to claim 2 or 3, wherein the look up table for the two-dimensional image is acquired to be associated with the physical coordinates of the look up table for the three-dimensional image.

5. The external-appearance inspection apparatus according to any one of claims 2 to 4, wherein the look up table for the two-dimensional image is acquired by photographing a line image multiple times at a fixed interval every time a distance from a camera is changed.
